# EUROPEAN PATENT SPECIFICATION

(11) **EP 3 204 732 B1**
(45) Date of publication and mention of the grant of the patent: **13.11.2019**
(21) Application number: 14814730.9
(22) Date of filing: 21.10.2014
(51) Int. Cl.: G01D 11/24, G01D 11/30

(54) **DEVICE FOR SENSING MECHANICAL-PHYSICAL AND OPTICAL PROPERTIES OF BULK SOLIDS**
VORRICHTUNG ZUM ERFASSEN MECHANISCH- PHYSIKALISCHER UND OPTISCHER EIGENSCHAFTEN VON SCHÜTTGÜTERN
DISPOSITIF POUR DÉTECTER DES CARACTERISTQUES MÉCANIQUES - PHYSIQUES ET OPTIQUES DES MATÉRIAUX EN VRAC

(30) Priority: 06.10.2014 CZ 20140679
(43) Date of publication of application: 16.08.2017
(73) Proprietor: Vysoká Skola Bánská - Technická Univerzita Ostrava, 708 33 Ostrava Poruba (CZ)
(72) Inventor: SLIVA, Ales, CZ-739 35 Václavovice (CZ); BRÁZDA, Robert, CZ-708 00 Ostrava (CZ); GÜNTER, Petr, CZ-747 19 Bohuslavice (CZ); PROCHÁZKA, Ales, CZ-700 30 Ostrava (CZ); BORA, Tomás, CZ-71600 Ostrava (CZ); KASNY, Rostislav, CZ-687 11 Topolná (CZ); ZAHRADNIK, Ales, CZ-73961 Tnnec (CZ); ZILKA, Frantisek, CZ-798 47 Horni Stepánov (CZ)
(74) Representative: Kendereski, Dusan
(86) International application number: PCT/CZ2014/000118
(87) International publication number: WO 2016/055032

(56) References cited:
- WO-A1-97/07017
- CZ-B6- 303 700

## Description

### Field of the Invention

The invention relates to a device for sensing mechanical-physical and optical properties of bulk solids and exploration and localization of life-threatening places, comprising a basic body equipped with recesses, heads, a source and a recording storage, wherein the body further comprises an optical properties sensor and a physical properties detector.

### State of the Art

In a certain sense, the field of bulk solids is unexplored and it is necessary to approach the identification of the properties of bulk solids in this regard. The problem arises with the identification of dangerous bulk solids: rocks, sands, which are prone to land-slide (shifting sand), avalanche snow or minefields. Any solution in this field is a progress, because it secures a signal transmission from the incriminated place to a secure place of the examiner, where there is no threat of land-slide or any other danger.

There are known devices for identification and sensing of bulk solids properties. The device is designed to measure properties by sinking into bulk solids and to identify them or to sense bulk solids behaviour "in vitro" in various transport, operating or storing systems respectively.

A Czech patent CZ 303700 B6 discloses a capsule-type sensor of physical and optical properties of bulk solids. It consists of a basic body, where in the outside part there is installed at least one transparent head, whereas in the inside part are arranged a combined unit of a source and a recording storage, an optical properties sensor and a physical properties detector, wherein at least one transparent head comprises a detector of physical properties on the inside. The measurement of physical and optical properties of bulk solids is realized using a capsule-type sensor which is placed into an initial position on the surface of bulk solids so that the y axis of the capsule-type sensor is identical with the y axis of a bulk solids feeder, afterwards the feeder outlet is opened and the capsule-type sensor is sunk into the bulk solids. During the passage of the capsule-type sensor through the bulk solids, optical properties are sensed by the sensor of optical properties and physical properties are sensed by the detector of physical properties and the surface of bulk solids in the feeder is being constantly refilled to the upper level during measurement. A certain drawback of this design is its impossibility to use at places, where the fixation onto an examined surface or the penetration into an examined surface is necessary.

An international patent publication WO 97/07017 A1 describes an enclosure for weaponry, listening, identifying, recording or communications equipment for use in or on the seabed. The enclosure comprises an outer cylindrical container equipped with buoyancy chambers for proper vertical alignment of the container with its lower end pointing downwards, a motor-driven propeller means for activation of the seabed material (sand, silt or shingle) and a payload compartment for holding weaponry, listening, recording and/or communications equipment. The container wall has a double wall partition to form a plurality of separate passages. These passages extend spirally from inlets at the lower end of the container upwardly to outlets at the top of the container through which activated sand, silt or shingle and water generated at the lower end of the container can flow upwardly and freely as the container self-buries in the seabed.

The main disadvantage of this device rests in the double wall partition arrangement of the container, because the activated material of the seabed, even if mixed with water, is forced to flow through the passages by the propeller means and is likely to cause stoppage therein. The narrow double wall partition is even more set to create stoppage in the absence of liquid water in the material, e.g. in bulk solids, snow, soil or shifting sands. Moreover, the described device might experience difficulties upon imprecise impact or in strong ocean currents that might tilt it or overturn it entirely. It is not clear from the description how such a situation would be rectified by propeller means. Instead, to assist in aligning the container vertically as it sinks into the seabed, additional propulsion means in the form side thruster pumps are mounted on the outside of the housing. It is not clear how these side thruster pumps would help to align the device vertically after complete overturning on the seabed. According to one embodiment, the number of propulsion and stabilization devices amounts to a total number of six (three propellers and three side thruster pumps), which makes the disclosed enclosure costly and prone to disalignment in case of malfunctioning.

### Summary of the Invention

The present invention discloses a device for recording conditions of properties of bulk solids in wireless transmission mode which is usable particularly at life threatening places, for instance at shifting masses, shifting sands, avalanches and the like. The invention is complemented by a unit for automatic sinking after dropping this unit at the incriminated place, where the shifting of bulk solids occurs.

The above mentioned drawbacks are eliminated by a device for sensing mechanical-physical and optical properties of bulk solids and examination and localization of life-threatening places, comprising a basic body, wherein on the outer part of said basic body at least one recess covered by a transparent head is arranged and in the inner part of said basic body a combined unit with a source and a recording storage are arranged. The basic body further comprises a sensor of optical properties, a detector of physical properties and a position sensor including a signal transmitter, wherein the detector of physical properties is arranged in at least one recess. Furthermore, a sinking medium comprising a worm screw equipped with a propulsion means and a means for attachment to the basic body constitutes an integral part of the device and the centre of mass of said device is situated along the rotational axis of the worm screw. The worm screw is of conical shape and is driven by the propulsion means and adapted to sink said device into bulk solids. The conical shape of the worm screw is advantageous in case of imprecise impacts, where proper vertical alignment during "sinking" is required. This is achieved by the conical shape in combination with the centre of mass of the whole device being situated along the rotational axis of the worm screw.

In contrast to the current state of art, the essential difference is that the present invention extends the use of prior art embodiments in life-threatening places or hard-to-reach areas from which it is necessary to obtain data.

An advantage is also the possibility to transport the device to the place using various means of transport, for instance, it can be dropped at the incriminated place from a helicopter.

To navigate the device for recording conditions of properties of bulk solids in a wireless transmission mode to the surface of the impact, it is necessary for the centre of gravity of the device to be placed on the axis of the device in such point (place) so as to navigate the worm screw to the intended impact surface. One thing emerging from this condition is that the material from which the sinking medium is made has to be of higher density than the density of the basic body.

The sinking medium for sinking the device comprises a worm screw equipped with an automatic propulsion means, comprising an electric motor and a control unit including an activation sensor for dropping from a means of transport. The device can be set up so as to "self-sink" itself in hard-to-reach places.

### Brief Description of the Drawings

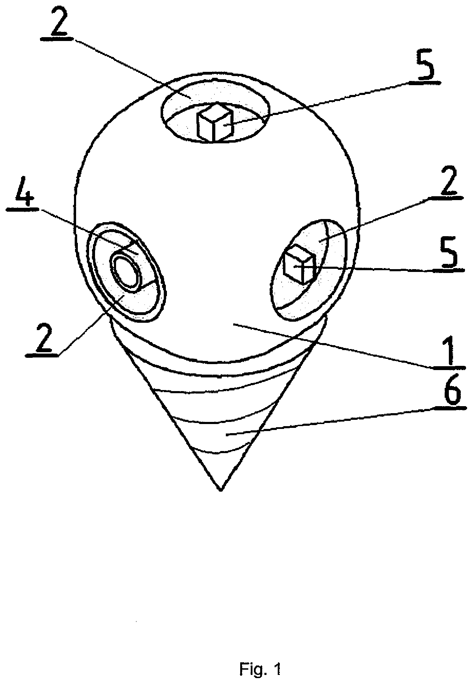

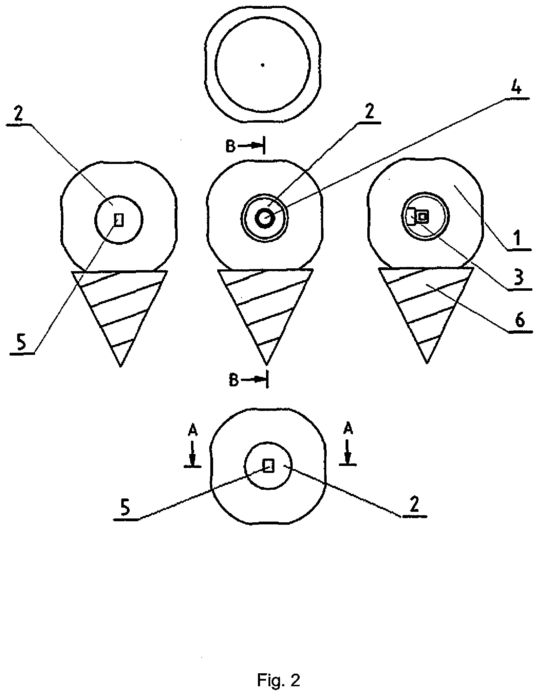

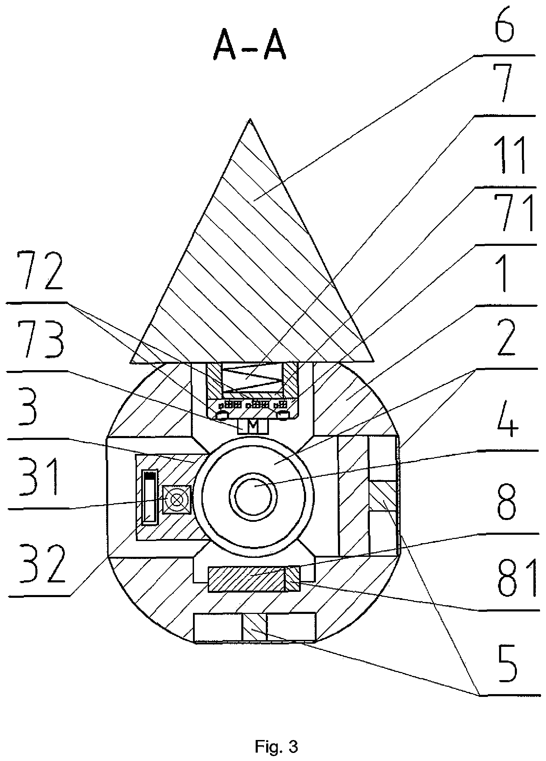

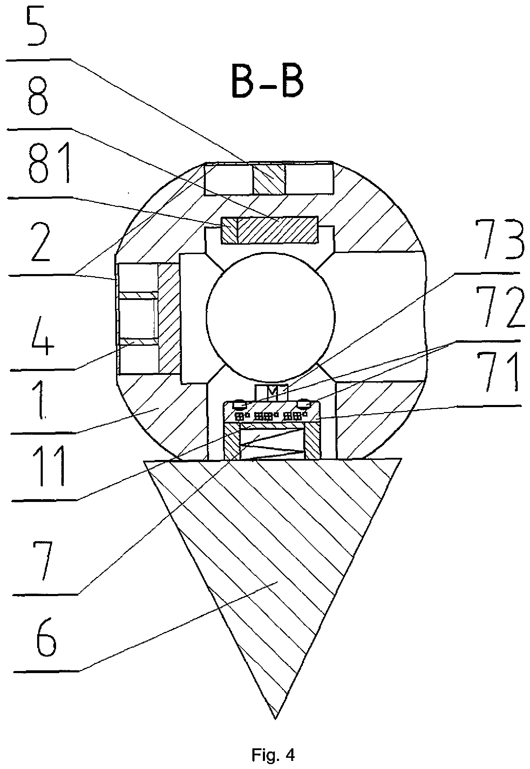

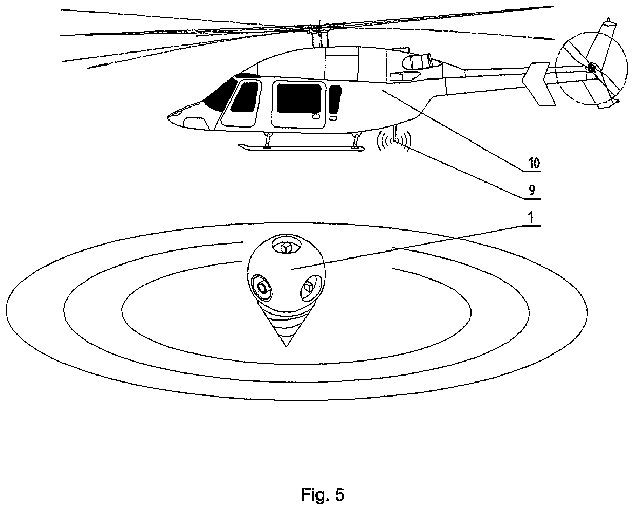

The present invention will be further described with reference to the drawings, where the Fig. 1 illustrates the sinking medium in perspective view, Fig. 2 illustrates the sinking medium from the Fig.1 in perpendicular views, Fig. 3 illustrates A-A section from the Fig. 2, Fig. 4 illustrates B-B section from the Fig. 2, and Fig. 5 illustrates the transport of the device by the means of transport to the place of destination.

### Description of the Preferred Embodiments

The invention will be further clarified in the following description of the preferred embodiments of the device with reference to the respective figures.

Said device in the exemplary use in bulk solids with position sensing via GPS and sensing of the condition of bulk solids properties, where dropping from a helicopter is chosen as the means of transport of the device at the incriminated place - the dangerous place is shown in Figs. 1 to 5.

As is apparent from Fig. 1, Fig. 2, Fig. 3, and Fig. 4, the device for sensing of bulk solids and examining and localization of life threatening places comprises a basic body **1**, where in its outer part there are arranged three recesses covered by transparent heads **2**. Optical properties sensors **4** are arranged in the recesses, wherein at least in one recess there is a physical properties detector **5**. It is apparent from Fig. **3**, which illustrates the A-A section, that inside the main body **1** there is arranged a combined unit **3** comprising a source **31** and a recording storage **32** of data. The combined unit **3** is placed in a recess in such way so as to enable the recording into the recording storage **32** via the transparent head **2**.

It results from Fig. 4 illustrating the B-B section that a sinking medium **11**, comprising a worm screw **6** and a propulsion means **7**, is attached to the main body **1** via attachment means. The propulsion means **7** comprises an electric motor, a control unit **71** and a means **72** for activation of the device (activation sensor after landing). The centre of mass of said device is situated along the rotational axis of the worm screw **6**. Furthermore, in the inner part of the main body **1** there is arranged a position sensor **8** including a signal transmitter **81**. The position sensor **8** records the actual position of the basic body **1** and current data from the position sensor **8** (e.g. GPS position sensor) are sent to a signal receiver **9** of the device's position which is placed in a mobile medium **10** in a safe distance from the critical place of impact.

The function of the device is as follows. The device is activated while being dropped from the mobile medium **10** (a helicopter) or from any other means of transport, wherein the sinking medium **11** is activated when in contact with the surface of the examined place and the worm screw **6** will "sink" into the bulk solids, for example shifting sand, via the propulsion means **7**. Eventually the device position data are recorded and transmitted via the optical properties sensor **4** and physical properties sensor **5**, wherein the position of the basic body **1** is being constantly recorded using the GPS position sensor **8** including the signal transmitter for the signal receiver **9** of the position of the device, which is placed in the safe place distant from the incriminated place.

Another embodiment is to use the device for identification of the conditions in snow and for searching for persons, for instance under an avalanche (the device is again dropped from a helicopter-dangerous place)

The device consists of a basic body **1**, in its outer part there is arranged at least one recess covered by a transparent head **2**. In the inner part of the basic body **1** there are arranged a combined unit **3** with a source **31** and a recording storage **32**, an optical properties sensor **4** and a physical properties detector **5**.

The device is activated while being dropped from a helicopter or any other means of transport (a mobile medium **10**), as is shown in Fig. 5. A sinking medium **11** is activated when in contact with the surface and a propulsion means **7** is activated via a control unit **71**, subsequently a worm screw **6** "sinks" into a certain area. Eventually the optical properties sensor **4** and the physical properties detector **5** are activated, wherein the position of the basic body **1** is being constantly recorded using a GPS position sensor **8** including a signal transmitter **81**. These signals are received by a signal receiver **9** of the position, which is placed in the safe place distant from the incriminated place.

Another embodiment is to use the device for localization of minefields or dangerous objects, wherein the device is dropped from a helicopter to a designated location. The incriminated place is indicated using several devices.

The device consists of a basic body **1** comprising transparent heads **2**, a combined unit **3** with a source **31** and a recording storage **32** and it further comprises an optical properties sensor **4** and a physical properties detector **5**. The device is activated while being dropped from a mobile medium **10** (a helicopter) or from any other means of transport as shown in Fig. 5. A sinking medium **11** is activated when in contact with the surface as described above. The device is fixed onto the intended place, where the occurrence of mines, etc. is expected, and subsequent activation of the optical properties sensor **4** and the physical properties detector **5** takes place, wherein the position of the basic body **1** is being constantly monitored via a GPS position sensor **8** including a signal transmitter **81**. These signals are received by a signal receiver **9** of the position, which is placed in the safe place distant from the incriminated place.

### Industrial Applicability

The function of said device is to sense mechanical-physical and optical properties of bulk solids and it functions on the principle of wireless communication with an operating system. Its applicability can be multifunctional; it can be used in the search for mines in wide surroundings, in search for people under snow, for detection of objects and for measuring properties of the environment in which it is currently placed.

### List of reference signs

- 1: basic body
- 2: transparent head
- 3: combined unit of the source and recording storage
- 31: source
- 32: recording storage of data
- 4: optical properties sensor
- 5: physical properties detector
- 6: worm screw
- 7: propulsion means
- 71: control unit
- 72: means for activation of the propulsion means
- 73: electric motor
- 8: position sensor
- 81: signal transmitter
- 9: signal receiver of the device position
- 10: mobile medium
- 11: sinking medium

## Claims

1. A device for sensing bulk solids and exploration and localization of life-threatening places, comprising a basic body (**1**), wherein on the outer part of said basic body (**1**) at least one recess covered by a transparent head (**2**) is arranged, and in the inner part of said basic body (**1**) a combined unit (**3**) with a source (**31**) and a recording storage (**32**) are arranged, wherein the basic body (**1**) further comprises an optical properties sensor (**4**), a physical properties detector (**5**) and a position sensor (**8**) including a signal transmitter (**81**), wherein the physical properties detector (**5**) is arranged in at least one recess, wherein a sinking medium (**11**) is attached to the basic body (**1**) to form an integral part thereof, wherein the sinking medium comprises a propulsion means (**7**), **characterized in that** the sinking medium (**11**) further comprises a worm screw (**6**) of conical shape, which is driven by the propulsion means (**7**) and adapted to sink said device into bulk solids, wherein the centre of gravity of said device is situated along the axis of the device in such point so as to navigate the worm screw (6) to the intended impact surface wherein the material of the sinking medium (11) being of higher density than the material of the basic body (1).

2. The device for sensing bulk solids and exploration and localization of life-threatening places according to claim 1, **characterized in that** the propulsion means (**7**) comprises an electric motor (**12**) with a control unit (**71**) and an activation means (**72**) of the device.

## Patentansprüche

1. Eine Vorrichtung zur Erfassung von Schüttgütern und zur Exploration und Lokalisierung lebensbedrohlicher Stellen umfassend einen Grundkörper (**1**), wobei am Außenteil des Grundkörpers (**1**) mindestens eine von einem transparenten Kopf (**2**) abgedeckte Ausnehmung angeordnet ist, und im Innenteil des Grundkörpers (**1**) eine kombinierte Einheit (**3**) mit einer Quelle (**31**) und einem Aufnahmespeicher (**32**) angeordnet ist, wobei der Grundkörper (**1**) ferner einen Sensor (**4**) von optischen Eigenschaften, einen Detektor (**5**) von physikalischen Eigenschaften und einen Positionssensor (**8**) mit einem Signalgeber (**81**), wobei der Detektor (**5**) von physikalischen Eigenschaften in mindestens einer Ausnehmung angeordnet ist, wobei ein Sinkmittel (**11**) an dem Grundkörper (**1**) zu einem integralen Teil davon befestigt ist, wobei das Sinkmittel ein Antriebsmittel (**7**) umfasst, **dadurch gekennzeichnet, dass** das Sinkmittel (**11**) ferner eine Schneckenschraube (**6**) konischer Form umfasst, die von dem Antriebsmittel (**7**) angetrieben ist und dazu eingerichtet ist, die Vorrichtung in Schüttgütern zu senken, wobei sich der Schwerpunkt der Vorrichtung entlang der Achse der Vorrichtung in einem solchen Punkt befindet, dass die Schneckenschraube (**6**) auf die vorgesehene Prallfläche navigiert ist, wobei das Material des Sinkmittels (**11**) eine höhere Dichte als das Material des Grundkörpers (**1**) aufweist.

2. Die Vorrichtung zur Erfassung von Schüttgütern und zur Exploration und Lokalisierung lebensbedrohlicher Stellen nach Anspruch 1, **dadurch gekennzeichnet, dass** die Antriebsmittel (**7**) einen Elektromotor (**12**) mit einer Steuereinheit (**71**) und einem Aktivierungsmittel (**72**) der Vorrichtung umfasst.

## Revendications

1. Un dispositif de détection de solides en vrac et d'exploration et de localisation d'emplacements dangereux, comprenant un corps de base (**1**), où sur la partie externe dudit corps de base (**1**) au moins un renfoncement recouvert d'une tête transparente (**2**) est disposé, et dans la partie intérieure dudit corps de base (**1**) une unité combinée (**3**) avec une source (**31**) et une mémoire d'enregistrement (**32**) est disposée, où le corps de base (**1**) comprend en outre un capteur de propriétés optiques (**4**), un détecteur de propriétés physiques (**5**) et un capteur de position (**8**) comprenant un émetteur de signal (**81**), où le détecteur de propriétés physiques (**5**) est disposé dans au moins un renfoncement, où un milieu de fonçage (**11**) est fixé au corps de base (**1**) pour former une partie intégrante de celui-ci, où le milieu de fonçage comprend un moyen de propulsion (**7**), **caractérisé en ce que** le milieu de fonçage (**11**) comprend en outre une vis sans fin (**6**) de forme conique, qui est entraînée par le moyen de propulsion (**7**) et conçu pour faire couler ledit dispositif en solides en vrac, où le centre de gravité dudit dispositif est situé le long de l'axe du dispositif dans un tel point de manière à naviguer la vis sans fin (**6**) à la surface d'impact prévue, où le matériau du milieu de fonçage (**11**) est de densité supérieure à celle du matériau du corps de base (**1**).

2. Le dispositif de détection de solides en vrac et d'exploration et de localisation d'emplacements dangereux selon la revendication 1, **caractérisé en ce que** le moyen de propulsion (**7**) comprend un moteur électrique (**12**) avec une unité de commande (**71**) et un moyen d'activation (**72**) du dispositif.
